Europäisches Patentamt

European Patent Office

Office européen des brevets

(19)

(11) Publication number: **0 272 829**
**A1**

(12) **EUROPEAN PATENT APPLICATION**

(21) Application number: **87310737.9**

(22) Date of filing: **07.12.87**

(51) Int. Cl.⁴: **F16B 41/00**

(30) Priority: **08.12.86 GB 8629312**

(43) Date of publication of application:
**29.06.88 Bulletin 88/26**

(84) Designated Contracting States:
**DE ES FR GB GR IT NL SE**

(71) Applicant: **Deacon, Bryan**
**26 Audley Road**
**Chippenham Wiltshire SN14 ODY(GB)**

(72) Inventor: **Deacon, Bryan**
**26 Audley Road**
**Chippenham Wiltshire SN14 ODY(GB)**

(74) Representative: **Bardo, Julian Eason et al**
**Abel & Imray Northumberland House 303-306**
**High Holborn**
**London, WC1V 7LH(GB)**

(54) **Fastening device.**

(57) A fastening device comprises a bolt (22), a nut (29) with screw threaded engagement with the bolt, and a cup-shaped member (26) which is bolted on the bolt and retained thereon when the nut is in screw threaded engagement with the bolt; the member having an upstanding wall (30) which is arranged to surround partly the nut or the head of the bolt, there being a space between the member (26) and the nut/head of the bolt to permit the latter to be engaged by engaged by a tool for turning the fastening device. Means are provided for impeding access to the space after the fastening device has been turned. The means may comprise an insert (31) or the end of the upstanding wall (30) may be bent over.

FIG.16.

EP 0 272 829 A1

## Fastening Devices

The present invention relates to fastening devices incorporating screw-threaded members and, in particular, to fastening devices incorporating a nut and bolt.

In certain circumstances, for example, in assembling security fences, it is desirable to employ fastening devices which, once secured, cannot readily be released. Conventional nut-and-bolt fasteners are easy and, therefore, relatively inexpensive to install. However, they are also easy to release and consequently are not suitable for use when security is important. Conventional rivets, on the other hand, are more secure but are also more difficult, and therefore expensive, to install.

Fastening devices which are of the nut-and-bolt type but which cannot be released so easily, have already been proposed. For example, devices are known in which the nut incorporates some form of insert which, when the device is secured, comes between adjacent threads on the nut and bolt and produces an interference fit which resists removal of the nut. Alternatively, chemical agents may be used to bond the nut to the bolt, or the thread on the nut may be deformed to bring about positive de-pitching of the bolt thread as the fastening device is secured and thereby hinder subsequent removal of the nut. In each of these arrangements, it is possible to gain a purchase on the nut using conventional tools and the fastener is, accordingly, open to attack.

Other proposed arrangements have the object of rendering the head of the nut inoperative after initial tightening. In one such proposal, the nut has the form of a threaded cone with a hexagonal head, the cone and head being joined by a thin neck of material. When the nut is tightened on the bolt, the thin neck of material shears leaving the cone in place while the head is free to be removed. The cone, having a smooth outer surface, is harder to remove than a conventional nut but it is still exposed and, accordingly, still open to attack. Arrangements of this type also suffer from the disadvantage that it is difficult to control the fastening torque (i.e. the torque at which the shearing takes place).

It is an object of the present invention to provide a fastening device of the nut-and-bolt type, which is relatively easy to fasten but relatively difficult to release.

The present invention provides a fastening device comprising

a bolt,

a nut for screw-threaded engagement with the bolt,

a member which is located on the bolt and retained thereon when the nut is in screw-threaded engagement with the bolt, the member having a peripheral portion which is arranged to surround partly the nut or the head of the bolt, there being a space between the member and the nut/head of the bolt to permit the latter to be engaged by a tool for tightening the fastening device, and

means for impeding access to the space after the fastening device has been tightened.

In the first form of the invention, the said member is deformed, when the fastening device has been tightened, to enclose the nut/head of the bolt at least partly and impede access to the said space. In a second form of the invention, an insert is provided for location in the said member, the insert being shaped to impede access to the space.

Preferably the member and the insert (if there is one) are made of metal, for example steel. Steel components can readily provide the necessary strength and ductility.

The member may be cup-shaped and comprise a base in which is formed an aperture enabling the member to be located on the bolt with the upstanding wall of the member surrounding the nut/head of the bolt. The cup-shaped member is of such a size that the upstanding wall is spaced apart from the nut/head of the bolt to enable the latter to be engaged by a suitable tool (e.g. a socket spanner) for tightening the fastening device.

In the first form of the invention mentioned above, the upper portion of the upstanding wall of the cup-shaped member may be bent over, when the fastening device has been tightened, to enclose the nut/head of the bolt. In that case the means for impeding access to the space after the fastening device has been tightened may comprise the upper portion of the upstanding wall of the cup-shaped member, the upper portion being able to be bent over inwardly to close off access to the space. The upper portion of the upstanding wall is preferably divided around the circumference into a plurality of separate portions, each of which is able to be bent inwardly. This facilitates the inward bending of the upstanding portion of the wall.

In the second form of the invention mentioned above, the insert may be located in the annular space between the upstanding wall of the cup-shaped member and the nut/head of the bolt, when the fastening device has been tightened. Preferably, the insert is an interference fit in the annular space. The upper portion of the cup-shaped member may be flared outwardly to facilitate insertion of the insert. In this second form of the invention also, the edge of the upstanding wall of the cup-shaped member can be turned over, when the insert is in position, to enclose the nut/head of the bolt and the insert, at least partly. The insert may also be cup-shaped, the upstanding wall of the insert being an interference fit within the upstanding wall of the cup-shaped member and the base of the insert enclosing the nut/head of the bolt at least partly.

The shaft of the bolt and the aperture in the base of the cup-shaped member may be so shaped that the cup-shaped member is not rotatable about the shaft. Alternatively, the cup-shaped member may be freely-rotatable about the shaft and the nut when the fastening device has been tightened and the insert, when present, may be an interference fit inside the cup-shaped member and may be rotatable therewith. In this alternative form, a washer may be provided on the shaft of the bolt and the aperture in the base of the cup-shaped member may be large enough to enable the cup-shaped member to be located around the washer.

The cup-shaped member and insert (if included) may be provided separately from a nut and bolt with which they are to be used. The present invention also provides a cup-shaped member for location on the bolt of a fastening device comprising a nut and a bolt, the member including a base and an upstanding wall, there being an aperture in the base of the cup-shaped member enabling the member to be located on the bolt with the upstanding wall of the member surrounding the nut or head of the bolt, and means for impeding access to the space after the fastening device has been tightened.

The present invention further provides a method of securing a fastening device comprising a nut and a bolt, the method including the steps of locating on the bolt a member which is shaped to surround the nut or head of the bolt while providing access to the nut/head of the bolt permitting the latter to be engaged by a tool for tightening the fastening device, screwing the nut onto the bolt to tighten the fastening device and to retain the member on the bolt, and then restricting the access to the nut/head of the bolt.

The access may be restricted by deforming the member or by locating an insert between the member and the nut/head of the bolt.

By way of example, fastening devices in accordance with the present invention will now be described with reference to the accompanying drawings, in which:

Fig. 1 is a plan view showing an initial stage in the assembly of a fastening device;

Fig. 2 is a sectional view on the line II-II of Fig. 1;

Figs. 3 and 4 correspond to Figs. 1 and 2 but show the next assembly stage;

Figs. 5 and 6 correspond to Figs. 3 and 4 but shown the assembled fastening device;

Fig. 7 is a plan view of a component of the fastening device of Figs. 5 and 6;

Fig. 8 is a sectional view on the line VIII-VIII of Fig. 7;

Fig. 9 is a plan view showing an initial stage in the assembly of another form of fastening device;

Fig. 10 is a sectional view on the line X-X of Fig. 9;

Figs. 11 and 12 correspond to Figs. 9 and 10 but show the next assembly stage;

Figs. 13 and 14 correspond to Figs. 11 and 12 but show the next assembly stage;

Figs. 15 and 16 correspond to Figs. 13 and 14 but show the assembled fastening device;

Fig. 17 is a sectional view of an assembled fastening device similar to that of Figs. 15 and 16 but with a bolt head also protected;

Fig. 18 is a sectional view of another form of fastening device partly assembled;

Fig. 19 is a sectional view of the device of Fig. 18 fully assembled;

Fig. 20 is a plan view of the device of Fig. 18 fully assembled; and

Fig. 21 is a sectional view of an alternative form of a part of the fastening device of Figs. 9 to 16.

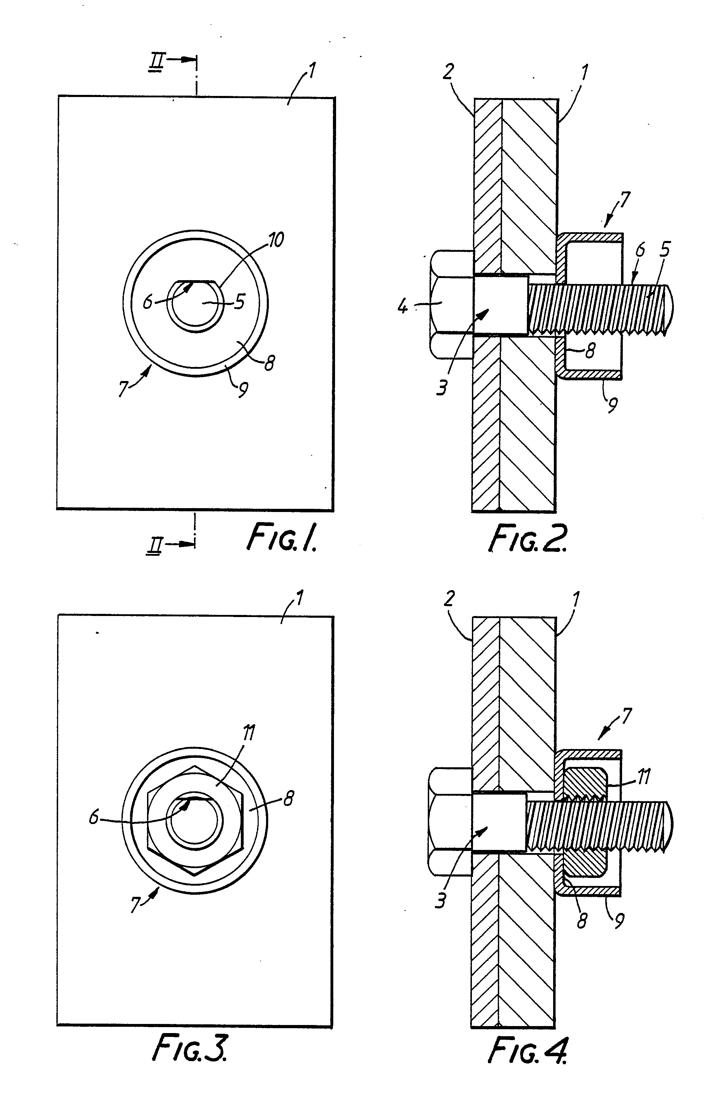

The fastening device shown in Figs. 1 to 6 is being used to secure together two members 1, 2 which could, for example, be parts of a security fence. The device comprises a bolt 3 having a hexagonal head 4 and a threaded shank 5 of conventional form except that the shank 5 has a flat 6 machined along the length of the threaded portion. The shank 5 is inserted through aligned apertures in the members 1, 2 with the head 4 of the bolt abutting the member 2, and a washer 7 is located on the shank of the bolt to abut the member 1. The washer 7 is cup-shaped, having a base 8, which lies adjacent the member 1, and an upstanding wall 9. The base 8 of the washer has a D-shaped aperture 10 which corresponds to the cross-section of the bolt shank 5 with the flat 6 and allows the washer to be located on the bolt.

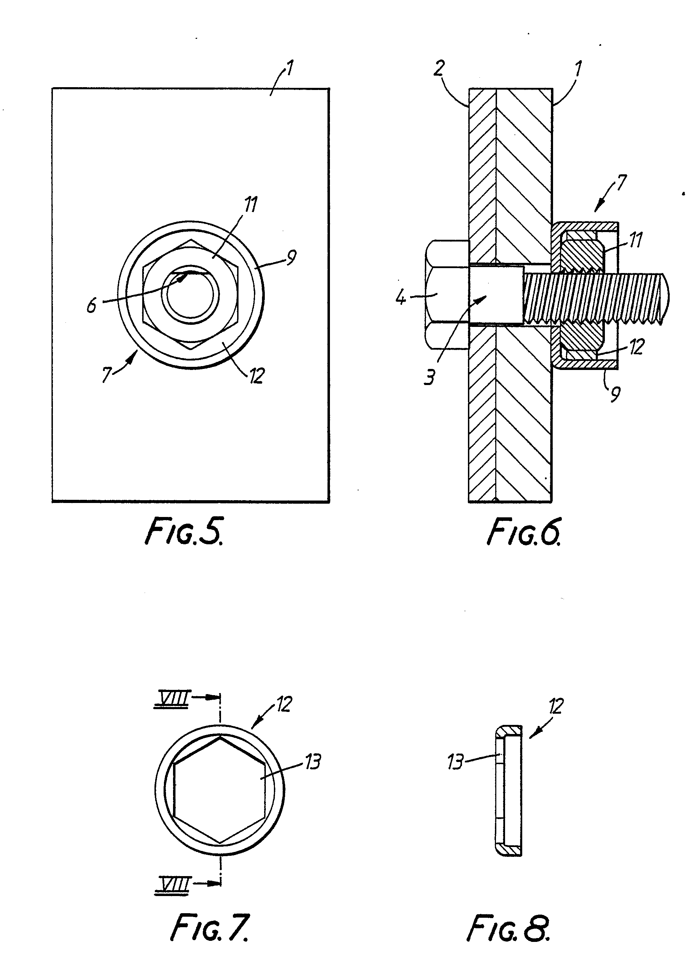

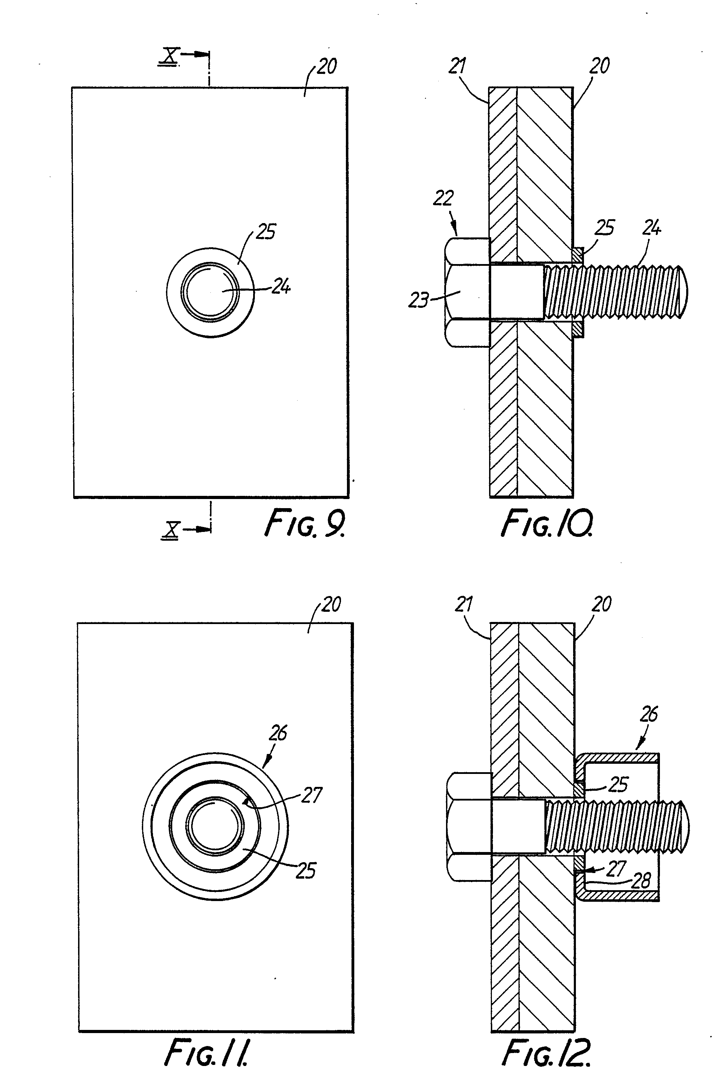

A conventional hexagonal nut 11 is now screwed onto the bolt and tightened against the base 8 of the washer 7 (Figs. 3 and 4). The size of the washer 7 is such that there is sufficient room between the nut 11 and the upstanding wall 9 of the washer to allow the nut to be tightened using a conventional socket tool. Finally (Figs. 5 and 6), an insert 12 is located in the space between the nut 11 and the wall 9 of the cup-shaped washer 7, and is driven home by impaction. The insert 12, which is shown in greater detail in Figs. 7 and 8, is generally ring-shaped and much shallower than the washer 7 but is turned over slightly at one end to define a hexagonal aperture 13 corresponding in size approximately to the nut 11. The outer diameter of the insert 12 is the same as the internal diameter of the cup-shaped washer 7 and the insert is located in the space between the nut and the washer with the turned-over end first: the latter straightens out as the insert is driven home and, when it is finally in position, the insert is an interference fit in the space between the washer and the nut 11.

The fastening device is now complete. The frictional resistance which is imparted by the interference fit of the insert 12 ensures that the washer 7, insert 12 and nut 11 function as a unit which is prevented from rotating relative to the bolt 3 by the flat 6 and the corresponding shaping in the aperture 10. It is, moreover, almost impossible to gain a purchase on the nut 11 due to the presence of the insert 12 but, even if this were to be achieved, any attempt to rotate the nut 11 would result, simply, in rotation of the whole fastening device, including the bolt 3.

The fastening device shown in Figs. 9 to 16 is also being used to secure together two members 20, 21 which could, as before, be components of a security fence. The device comprises a bolt 22 of conventional form, having a hexagonal head 23 and a threaded shank 24 which is inserted through aligned apertures in the members 20, 21 so that the head 23 abuts the member 21. A flat washer 25 is located on the shank 24 of the bolt, to abut the member 20 (Figs. 9 and 10) and a cup-shaped washer 26 is then located around the washer 25 (Figs. 11 and 12). This cup-shaped washer 26 is similar to the washer 7 of Fig. 6 but the aperture 27 in the base 28 of the washer 26 is circular and larger: in particular, the diameter of the aperture 27 is slightly greater than the outer diameter of the flat washer 25, enabling the base 28 of the washer 26 to lie adjacent the member 20 with the flat washer 25 positioned within the aperture 27. The flat washer 25 is slightly thicker than the base 28 of the cup-shaped washer 26.

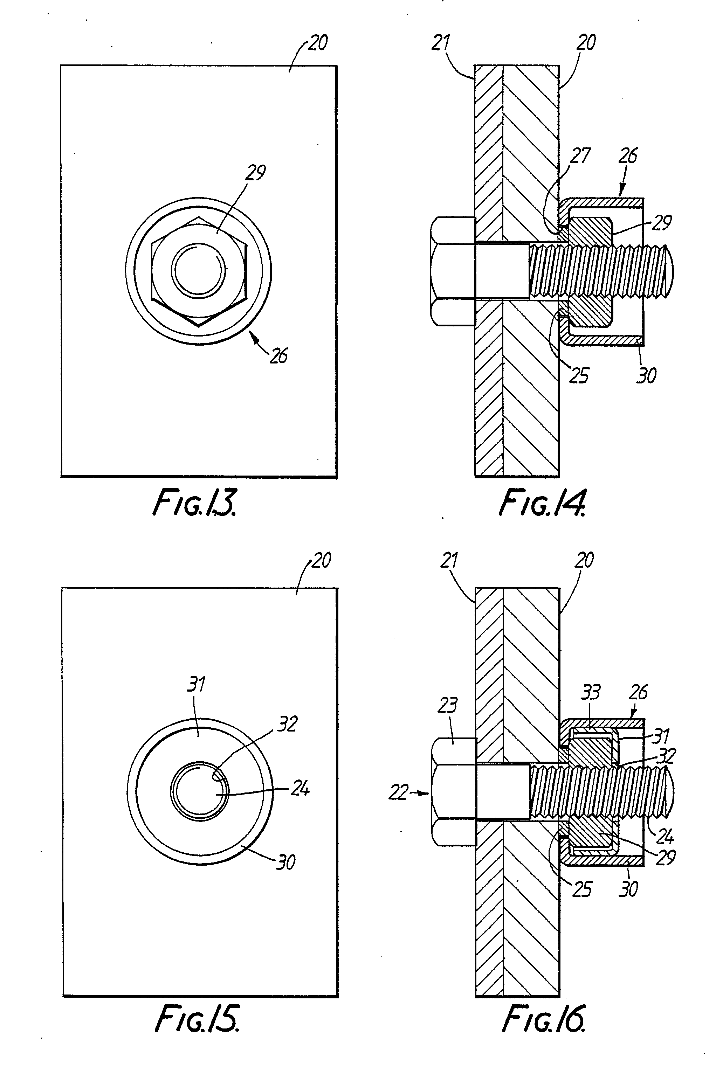

A conventional hexagonal nut 29 is now screwed onto the bolt and tightened against the flat washer 25 (Figs. 13 and 14). The size of the cup-shaped washer 26 is such that there is sufficient room between the nut 29 and the upstanding wall 30 of the washer to allow the nut to be tightened using a conventional socket tool. The diameter of the nut 29 is greater than that of the aperture 27 in the base of the cup-shaped washer 26 so that the latter will be trapped between the nut 29 and the member 20, although not secured because it is of reduced thickness compared to the washer 25. The cup-shaped washer 26 accordingly remains free to rotate around the washer 25 when the nut 29 is tightened.

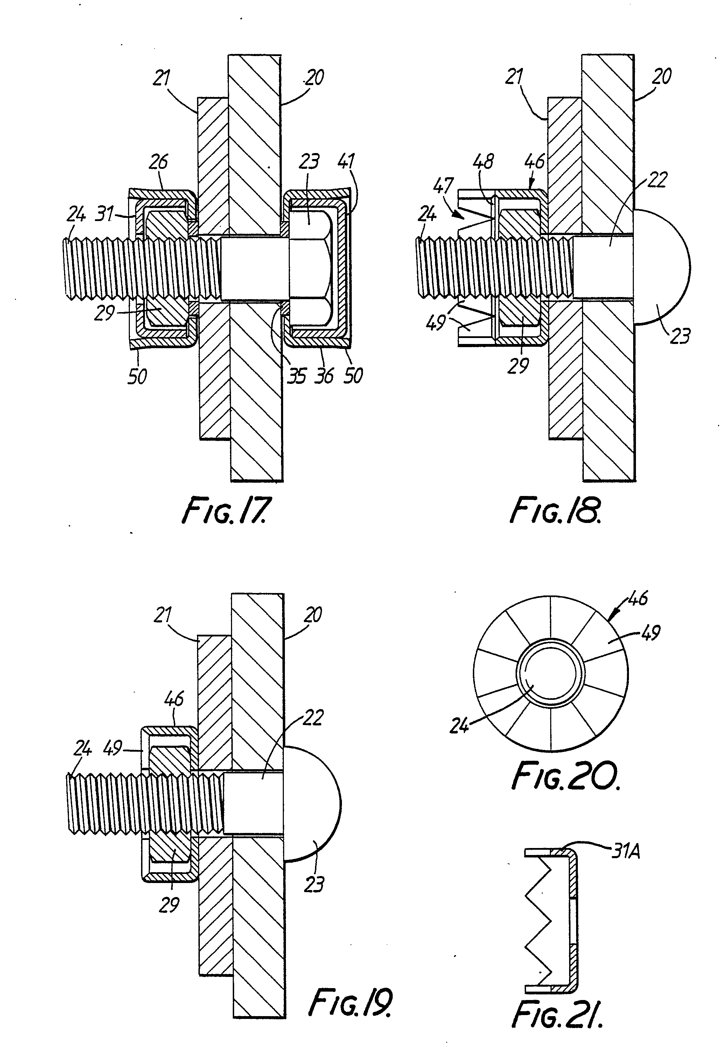

Finally (Figs. 15 and 16), an insert 31 is located over the bolt shank 24 in the space between the nut 29 and the wall 30 of the cup-shaped washer 26, and is driven home by impaction. This insert 31 is cup-shaped but shallower than the cup-shaped washer 26, and has a circular cut-out 32 in its base, enabling the insert to be located over the shank 24 of the bolt with the upstanding wall 33 first. The outer diameter of the insert 31 is the same as the internal diameter of the cup-shaped washer 26 but the thickness of the upstanding wall 33 of the insert is less than the width of the space between the nut 29 and the washer: consequently, the insert 31 is an interference fit inside the cup-shaped washer 26 and is able to rotate therewith around the washer 25 and the nut 29. When in position, the insert 31 conceals the nut 29 and makes it impossible to gain a purchase on the latter to release the fastening device.

It will be appreciated that the insert 31 of Figs. 15 and 16 could replace the insert 12 of Figs. 5 and 6 and vice versa. Alternatively, in both arrangements, the insert 12, 31 can be omitted: the nut 11, 29 is then concealed simply by crimping over the upper edge of the wall 9, 30 of the cup-shaped washer 7, 26.

In the arrangement of Figs. 15 and 16, the nut 29, bolt 22 and flat washer 25 are conventional and require only the addition of the cup-shaped washer 26 and, if required, the insert 31 to produce a fastening device which is substantially more secure because the nut 29 is effectively concealed. The arrangement of Figs. 5 and 6, on the other hand, requires a modified bolt 3 but offers the advantage that it is secure against vibration and that, even with a purchase on the nut, nothing more than rotation of the whole fastening device can be achieved.

If required, the combination of a cup-shaped washer and an insert as shown at 7, 12 in Fig. 6 or 26, 31 in Fig. 16 can be used to conceal the head 4, 23 of the bolt instead of, or in addition to, the nut 11, 29. Fig. 17 shows, for example, how a washer and insert of the kind shown in Fig. 16 may be used to conceal both a bolt head and a nut. A washer 35 and a cup-shaped washer 36 (similar or identical to the washer 25 and cup-shaped washer 26) is located adjacent the member 21 before the bolt is inserted. Then, when the bolt has been secured, an insert 41 is driven home, by impaction, into the space between the head 23 of the bolt and the upstanding wall of the cup-shaped washer 36. This insert is generally similar to the insert 31 of Fig. 16 but the aperture 32 allowing the washer to be located on the shank 24 of the bolt is not required. Alternatively, the insert can be omitted and the head 23 of the bolt can be concealed simply by crimping over the upper edge of the wall of the cup-shaped washer.

Fig. 18 shows an example of a nut and bolt assembly in which the nut is concealed simply by crimping over a cup-shaped washer. The assembly is similar to that shown in Fig. 16 and the same parts are designated by the same reference numerals. In this case a cup-shaped washer 46 is provided which is deeper than the washer 36 and "V" shaped cut-outs 47 are formed in the upstanding wall of the washer extending down as far as a "V" shaped groove 48 formed around the interior of the upstanding wall immediately beyond the end of the nut 29 and defining tangs 49 on the end of the washer. Once the nut 29 has been fully fastened to the bolt 22, the tangs 49 are bent inwardly using a suitable squeezing or impaction tool in a single-or multi-stage operation through 90° whereupon their free ends lie adjacent the shank 24 of the bolt. Figs. 19 and 20 show the assembly after bending of the tangs. The "V" shaped groove 48 about which the tangs 49 bend facilitates this bending operation. As an alternative to providing the "V" shaped groove 48, a bending line may for example be defined by crimping the washer along this line.

It will be noted that in the embodiment of Figs. 18 to 20 no component equivalent to the flat washer 25 of Fig. 16 is provided. It is however possible to provide such a component or to omit such a component from the embodiment of Fig. 16.

While in Figs. 18 to 20 the cup-shaped washer 46 is shown fitted around a nut, it may, as already suggested, be fitted around the head of a bolt. In this case the tangs would be longer and terminate in blunt pointed ends so that when bent inwardly through 90° they substantially closed off the space inside the washer.

In the embodiments of the invention shown in Figs. 9 to 16 the flat washer 25 and the cup-shaped washer 26 are shown as entirely separate components. However, for ease of assembly it may be convenient for the flat washer 25 to be fixed by some means to the cup-shaped washer 26 (for example by partly deforming the washer 25 or by other means). This fixing is not very strong so that when the insert 31 is driven into the washer 26, the fixing is broken enabling the washer 26 to rotate freely.

The cup-shaped washers 26 and 36 shown in Fig. 17 are flared outwardly at their upper ends 50 to facilitate insertion of the inserts 31 and 41. Once the inserts 31 and 41 are inserted the upper ends 50 may be crimped over the insert 12.

Fig. 21 shows a modified form of insert 12A that may be used in the embodiments of Figs. 9 to 16. The insert 31A differs from the insert 31 only in that the end of the peripheral wall of the insert is scalloped to provide for more precise entry into the cup-shaped washer 26.

In the embodiments of Figs. 9 to 21 it is assumed that the shaft 24 of the bolt 22 projects beyond the insert 12 and the cup-shaped washer. It is however possible for the bolt 22 to terminate within the confines of the washer and insert (if the latter is provided) and in that case there is of course no need to provide a central aperture in the insert or (in the case where there is not insert) in the bent over portion of the washer.

## Claims

1. A fastening device comprising
a bolt,
a nut for screw-threaded engagement with the bolt,
a member which is located on the bolt and retained thereon when the nut is in screw-threaded engagement with the bolt, the member having a peripheral portion which is arranged to surround partly the nut or the head of the bolt, there being a space between the member and the nut/head of the bolt to permit the latter to be engaged by a tool for tightening the fastening device, and
means for impeding access to the space after the fastening device has been tightened.

2. A fastening device according to claim 1 in which the member is cup-shaped including a base and an upstanding wall and in which an aperture is formed in the base enabling the member to be located on the bolt with the upstanding wall of the member surrounding the nut/head of the bolt.

3. A fastening device according to claim 2 in which the means for impeding access to the space after the fastening device has been tightened comprises the upper portion of the upstanding wall of the cup-shaped member, the upper portion being able to be bent over inwardly to close off access to the space.

4. A fastening device according to claim 3 in which the upper portion of the upstanding wall is divided around the circumference into a plurality of separate portions, each of which is able to be bent inwardly.

5. A fastening device according to claim 2 in which the means for impeding access to the space after the fastening device has been tightened comprises an insert locatable in the cup-shaped member, the insert being shaped to impede access to the space.

6. A fastening device according to claim 5 in which the insert is also cup-shaped, an upstanding wall of the insert being an interference fit within the upstanding wall of the cup-shaped member.

7. A cup-shaped member for location on the bolt of a fastening device comprising a nut and a bolt, the member including a base and an upstanding wall, there being an aperture in the base of the cup-shaped member enabling the member to be located on the bolt with the upstanding wall of the member surrounding the nut or head of the bolt, and means for impeding access to the space after the fastening device has been tightened.

8. A cup-shaped member according to claim 7 in which the means for impeding access to the space comprises the upper portion of the upstanding wall of the cup-shaped member, the upper portion being divided around the circumference into a plurality of separate portions, each of which is able to be bent inwardly.

9. A cup-shaped member according to claim 7 in which the means for impeding access to the space comprises an insert locatable in the cup-shaped member.

10. A method of securing a fastening device comprising a nut and a bolt, the method including the steps of locating on the bolt a member which is shaped to surround the nut or head of the bolt while providing access to the nut/head of the bolt permitting the latter to be engaged by a tool for tightening the fastening device, screwing the nut onto the bolt to tighten the fastening device and to retain the member on the bolt, and then restricting the access to the nut/head of the bolt.

0 272 829

FIG. 1.

FIG. 2.

FIG. 3.

FIG. 4.

FIG.5.

FIG.6.

FIG.7.

FIG.8.

FIG. 9.

FIG. 10.

FIG. 11.

FIG. 12.

FIG.13.

FIG.14.

FIG.15.

FIG.16.

FIG.17.

FIG.18.

FIG.19.

FIG.20.

FIG.21.

| | DOCUMENTS CONSIDERED TO BE RELEVANT | | EP 87310737.9 |
|---|---|---|---|
| Category | Citation of document with indication, where appropriate, of relevant passages | Relevant to claim | CLASSIFICATION OF THE APPLICATION (Int. Cl.4) |
| X | GB - A - 1 604 015 (BRIGGS AMASCO)<br>* Claims; fig. 1,2 * | 1,2,7, 10 | F 16 B 41/00 |
| A | -- | 3-6,8, 9 | |
| X | GB - A - 1 578 747 (SANGAMO WESTON)<br>* Claims; fig. 3 * | 1,2,7, 10 | |
| A | FR - A1 - 2 383 352 (MALHERBE, SENNELY)<br>* Fig. * | 1-10 | |
| A | GB - A - 1 178 396 (HILLS)<br>* Fig. * | 1 | |
| A | FR - A5 - 2 239 146 (LEVET)<br>* Totality *<br>---- | | TECHNICAL FIELDS SEARCHED (Int. Cl.4)<br><br>F 16 B |

The present search report has been drawn up for all claims

| Place of search | Date of completion of the search | Examiner |
|---|---|---|
| VIENNA | 22-03-1988 | REININGER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82